(19) Europäisches Patentamt
European Patent Office
Office européen des brevets

(11) EP 4 219 601 B1

(12) EUROPEAN PATENT SPECIFICATION

(45) Date of publication and mention of the grant of the patent:
**08.04.2026 Bulletin 2026/15**

(21) Application number: **22153795.4**

(22) Date of filing: **28.01.2022**

(51) International Patent Classification (IPC):
***C08J 3/00*** *(2006.01)* ***C08J 5/18*** *(2006.01)*
***C08L 23/08*** *(2025.01)*

(52) Cooperative Patent Classification (CPC):
(C-Sets available)
**C08J 5/18; C08L 23/0815;** C08F 4/65912;
C08F 4/65916; C08F 210/16; C08F 2420/07;
C08J 2323/06; C08J 2423/08; C08L 2205/035;
C08L 2207/066 (Cont.)

(54) **POLYETHYLENE BLEND FOR A FILM LAYER**
POLYETHYLENMISCHUNG FÜR EINE FOLIENSCHICHT
MÉLANGE DE POLYÉTHYLÈNE POUR UNE COUCHE DE FILM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.08.2023 Bulletin 2023/31**

(73) Proprietor: **Borealis GmbH**
**1020 Vienna (AT)**

(72) Inventors:
- **WANG, Jingbo**
**4021 Linz (AT)**
- **BERGER, Friedrich**
**4021 Linz (AT)**
- **ALABRUNE, Arnaud**
**92400 Courbevoie (FR)**
- **SEMAAN, Chantal**
**43003 Tarragona (ES)**

(74) Representative: **TBK**
**Bavariaring 4-6**
**80336 München (DE)**

(56) References cited:
**EP-A1- 3 298 067**
**WO-A1-2021/191019**
**WO-A1-2022/018239**
**US-B2- 10 494 465**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/16, C08F 2/001;**
**C08F 210/16, C08F 4/6492;**
**C08F 210/16, C08F 4/65927;**
**C08L 23/0815, C08L 23/0815, C08L 23/0815;**
C08F 210/16, C08F 210/08, C08F 2500/12, C08F 2500/27;
C08F 210/16, C08F 210/14, C08F 210/08, C08F 2500/12, C08F 2500/27, C08F 2500/26;
C08F 210/16, C08F 210/14, C08F 2500/12, C08F 2500/27, C08F 2500/08;
C08L 2207/066, C08L 2207/066, C08L 2207/066

## Description

The present invention relates to a polyethylene blend of a low density polyethylene (LDPE) and a specific multimodal metallocene catalysed linear low density polyethylene (mLLDPE), which provides films with well-balanced mechanical properties, especially dart drop (impact strength) and tensile modulus; i.e. high stiffness as well as high toughness, and additionally protrusion puncture resistance. Relevant prior art documents are WO 2022/018239 A1, EP 3 298 067 A1, WO 2021/191019 A1 and US 10 494 465 B2.

High standards are nowadays required for packaging materials. Quite often properties are required in the packaging industry, which are conflicting. Typically, high stiffness and toughness are required in parallel.

Polymer film manufacturers therefore seek films which have excellent mechanical properties, e.g. high impact strength, puncture resistance, toughness and stiffness at the same time. The polymers used to make the film must also have good processability, i.e. during the extrusion procedure the bubble formed must be stable and the extruded film should have an even film thickness distribution.

Unfortunately art skilled persons are faced with the problem that when improving one property it seems inevitable that another property is adversely affected.

For example, low density polyethylene (LDPE) gives rise to films having good optical properties and can be processed at low temperatures and pressures whilst maintaining melt strength and excellent processability however films made from LDPE contribute little to mechanical properties.

Thus, for achieving these different properties seldom pure components, but rather combinations of different polymer components are used.

Various blends have been proposed in the art to try to maximize film performance by combining the advantageous properties of certain polymers.

Within the family of PE polymers, low-density polyethylene (LDPE) and linear low-density polyethylene (LLDPE) resins have found extensive application in the packaging area using film blowing process. When comparing LDPE and LLDPE, it has been observed that the LDPE offers very good processability with lower mechanical properties. On the other hand, LLDPE exhibits better mechanical properties with lower processability.

Various blends of LDPE and LLDPE have been proposed in the art to try to maximize film performance by combining the advantageous properties of the certain polymers.

The LLDPE used as blend partner can be a Ziegler-Natta catalyst produced linear low density polyethylene (znLLDPE) or a metallocene catalyst produced linear low density polyethylenes (mLLDPE).

mLLDPE attracts specific interests due to its excellence balance between cost and performance. The main drawback is that the processability and optics are rather poor. LDPE rich blends with LLDPE are known to give excellent processability and good optical properties but suffer especially from poor mechanical properties.

Due to their excellence balance between cost and performance metallocene produced LLDPEs are traditionally used with LDPE to improve the mechanical properties of the blend but these cannot be added in sufficiently high amounts to improve mechanical properties without causing film blowing problems. Monolayer films are blown using narrow die gaps and because the blend of LDPE and metallocene LLDPE suffers from poor bubble stability as the content of metallocene LLDPE increases, blowing such blends is difficult. There are also real issues with melt fracture with LDPE/metallocene LLDPE blends.

Although a lot of development work has already been done in this field, there is still a continuous need to find improved/optimized LDPE/mLLDPE blends for providing tailored solutions to meet the increasing demands of the end application producers e.g. for reducing the production costs while maintaining or even improving the end product properties. Tailored polymer solutions are also needed to meet the requirements of continuously developing equipment technology in the end application field.

Thus, there is a need in the art for providing a blends that provides well-balanced mechanical properties, especially dart drop (impact strength) and tensile modulus; i.e. high stiffness as well as high toughness and in addition protrusion puncture resistance.

In other words, blends are desirable that provide an advantageous combination of tensile modulus and dart drop to films prepared from such blends.

In addition, such films should further show a well-balanced and continuously improved overall performance.

Such an improvement in the overall performance of a blown film can be expressed by the optomechanical ability (OMA), which is the ratio of mechanical (especially dart-drop impact strength (DDI) and tensile (MD)) behaviour, to optical performance, namely haze.

The present inventors have found that a blend of a low density polyethylene (LDPE) and a specific multimodal metallocene catalysed linear low density polyethylene (mLLDPE), provides films with well-balanced mechanical properties, especially dart drop (impact strength) and tensile modulus and additionally protrusion puncture resistance.

## Summary of Invention

The present invention is therefore directed to a polyethylene blend comprising

a) 60.0 wt% to 99.0 wt%, based on the total weight of the polyethylene blend, of a low density polyethylene (LDPE) whereby said LDPE has

a density in the range of 910 to 930 kg/$m^3$ and
a $MFR_2$ (190°C, 2.16 kg, ISO 1133) in the range of 0.1 to 2.0 g/10 min; and

b) 1.0 wt% to 40.0 wt%, based on the total weight of the polyethylene blend, of a multimodal metallocene catalysed linear low density polyethylene (mLLDPE) which consists of

(i) 30.0 to 70.0 wt% of an ethylene-1-butene polymer component (A), and
(ii) 70.0 to 30.0 wt% of an ethylene-1-hexene polymer component (B),

whereby the ethylene-1-butene polymer component (A) has

a density in the range of 920 to 950 kg/$m^3$,
a $MFR_2$ (190°C, 2.16 kg, ISO 1133) in the range of 2.0 to 400.0 g/10 min, and

the ethylene polymer component (B) has

a density in the range of 885 to 918 kg/$m^3$,
a $MFR_2$ (190°C, 2.16 kg, ISO 1133) in the range of 0.001 to 1.5 g/10 min,

whereby the multimodal metallocene catalysed linear low density polyethylene (mLLDPE) has

a density in the range of 910 to 930 kg/$m^3$,
a $MFR_2$ (190°C, 2.16 kg, ISO 1133) in the range of 0.1 to 2.5 g/10 min and
a ratio of the $MFR_{21}$ (190°C, 21.6 kg, ISO 1133) to $MFR_2$ (190°C, 2.16 kg, ISO 1133), $MFR_{21}/MFR_2$, in the range of 21 to 100.

In an embodiment of the present invention, the ethylene-1-butene polymer component (A) of the multimodal metallocene catalysed linear low density polyethylene (mLLDPE) consists of an ethylene polymer fraction (A-1) and an ethylene polymer fraction (A-2).

Unexpectedly the above defined blend of the invention provides well-balanced mechanical properties, especially dart drop (impact strength) and tensile modulus and additionally protrusion puncture resistance to films comprising such blends.

The invention is therefore further direct to films comprising the above defined polyethylene blend.

## Definitions

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

Metallocene catalysed linear low density polyethylene (mLLDPE) is defined in this invention as linear low density polyethylene copolymer, which has been produced in the presence of a metallocene catalyst.

For the purpose of the present invention "metallocene catalysed linear low density polyethylene (mLLDPE) which consists of an ethylene-1-butene polymer component (A) and an ethylene-1-hexene polymer component (B)" means that the mLLDPE is produced in an at least 2-stage sequential polymerization process, wherein first component (A) is produced and component (B) is then produced in the presence of component (A) in a subsequent polymerization step, yielding the

mLLDPE or vice versa, i.e. first component (B) is produced and component (A) is then produced in the presence of component (B) in a subsequent polymerization step, yielding the mLLDPE.

Low density polyethylene (LDPE) is defined in this invention as low density polyethylene copolymer, which has been produced in a high-pressure process.

Term "multimodal" in context of multimodal metallocene catalysed linear low density polyethylene means herein multimodality with respect to melt flow rate (MFR) ) of at least the ethylene polymer components (A) and (B), i.e. the ethylene polymer components (A) and (B), have different MFR values. The multimodal metallocene catalysed linear low density polyethylene can have further multimodality between the ethylene polymer components (A) and (B) with respect to one or more further properties, like density, comonomer type and/or comonomer content, as will be described later below.

## Detailed description of Invention

The polyethylene blend according to the present invention comprises a low density polyethylene (LDPE) and a multimodal metallocene catalysed linear low density polyethylene (mLLDPE)

Thus the blend comprises

a) 60.0 to 99.0 wt%, preferably 65.0 wt% to 95.0 wt%, more preferably 70.0 wt% to 90.0 wt% based on the total weight of the polyethylene blend, of the low density polyethylene (LDPE) and
b) 1.0 wt% to 40.0 wt%, preferably 5.0 wt% to 35.0 wt%, more preferably 10.0 wt% to 30.0 wt%, based on the total weight of the polyethylene blend, of the multimodal metallocene catalysed linear low density polyethylene (mLLDPE)

In an embodiment the blend consists of a) and b) only, thus the total amounts of a) + b) summing up to 100 wt%.

In another embodiment the blend consists of

a) 70.0 wt% to 85.0 wt%, preferably 70.0 to 80.0 wt%, based on the total weight of the polyethylene blend, of the low density polyethylene (LDPE) and
b) 15.0 wt% to 30.0 wt%, preferably 20.0 wt% to 30.0 wt%, based on the total weight of the polyethylene blend, of the multimodal metallocene catalysed linear low density polyethylene (mLLDPE), the total amounts of a) + b) summing up to 100 wt%.

*Ad low density polyethylene (LDPE)*

The polyethylene blend according to the present invention comprises as component a) a LDPE; whereby said LDPE has a density determined according to ISO 1183 in the range of 910 to 930 kg/m$^3$; and a $MFR_2$ (190°C, 2.16 kg, ISO 1133) in the range of 0.10 to 2.0 g/10 min.

The $MFR_2$ (190°C, 2.16 kg, ISO 1133) is preferably in the range of 0.15 to 1.5 g/10 min, more preferably in the range of 0.20 to 1.0 g/10 min, even more preferably in the range of 0.20 to 0.70 g/10min.

The density determined according to ISO 1183 of the LDPE is preferably in the range 913 to 930 kg/m$^3$, more preferably in the range of 914 to 930 kg/m$^3$ and even more preferably in the range of 914 to 925 kg/m$^3$.

Suitable LDPEs preferably have a comonomer content of 0.0 wt% to less than 15.0 wt%, more preferably of 0.0 wt% to less than 10.0 wt%, even more preferably of 0.0 wt% to less than 5.0 wt% and still more preferably 0.0 wt% to 1.0 wt%.

The low density polyethylene (LDPE) preferably is a low density homopolymer of ethylene (referred herein as LDPE homopolymer).

LDPEs are well known in the art and are produced in high pressure process usually performed in a tubular reactor or an autoclave.

Polymerization in tubular or autoclave reactors is well known and well documented in the literature in the polymerization field.

Such LDPEs typically contain long chain branching which differentiates LDPEs from linear low-density polyethylenes, LLDPEs.

Suitable LDPE's are available commercially from Borealis, Basell, Exxon, Sabic, or other suppliers.

A preferred LDPE for component a) is inter alia commercially available from Borealis AG (Austria) under the trade names FA3200.

*Ad multimodal metallocene catalysed linear low density polyethylene (mLLDPE)*

The multimodal metallocene catalysed linear low density polyethylene (mLLDPE) is referred herein as "multimodal", since the ethylene-1-butene polymer component (A), optionally including ethylene polymer fractions (A-1) and

(A-2), and ethylene-1-hexene polymer component (B) have been produced under different polymerization conditions resulting in different Melt Flow Rates (MFR, e.g. $MFR_2$). I.e. the multimodal PE is multimodal at least with respect to difference in MFR of the ethylene polymer components (A) and (B).

The multimodal metallocene catalysed linear low density polyethylene (mLLDPE) consists of

(i) 30.0 to 70.0 wt% of an ethylene-1-butene polymer component (A), and
(ii) 70.0 to 30.0 wt% of an ethylene-1-hexene polymer component (B).

The amount of (A) and (B) add up to 100.0 wt%.

In an embodiment of the present invention, the ethylene-1-butene polymer component (A) consists of an ethylene polymer fraction (A-1) and (A-2).

It is possible that fraction (A-1) is produced first and then fraction (A-2) is produced in the presence of fraction (A-1) in a subsequent reactor or vice versa, i.e. fraction (A-2) is produced first and then fraction (A-1) is produced in the presence of fraction (A-2) in a subsequent reactor. Preferably fraction (A-1) is produced first.

In case that the ethylene-1-butene polymer component (A) consists of ethylene polymer fractions (A-1) and (A-2), the $MFR_2$ of the ethylene polymer fractions (A-1) and (A-2) may be different from each other or may be the same.

The ethylene polymer fraction (A-1) has a $MFR_2$ (190°C, 2.16 kg, ISO 1133) in the range of 1.0 to 800.0 g/10 min, preferably of 1.5 to 400.0 g/10 min, more preferably of 1.8 to 200.0 g/10 min and even more preferably of 2.0 to 50.0 g/10 min, like 2.1 to 40.0 g/10 min.

The ethylene polymer fraction (A-2) has a $MFR_2$ (190°C, 2.16 kg, ISO 1133) in the range of 2.0 to 400.0 g/10 min, preferably of 2.5 to 200.0 g/10 min, more preferably of 3.0 to 100.0 g/10 min and most preferably of 3.5 to 80.0 g/10 min.

The $MFR_2$ of the ethylene polymer components (A) and (B) are different from each other.

The ethylene polymer component (A) has a $MFR_2$ (190°C, 2.16 kg, ISO 1133) in the range of 2.0 to 400 g/10 min, preferably of 2.5 to 300 g/10 min, more preferably of 3.0 to 200 g/10 min, even more preferably of 3.2 to 100 g/10 min and still more preferably of 3.5 to 70.0 g/10 min, like 3.8 to 50.0 g/10 min.

The ethylene polymer component (B) has a $MFR_2$ (190°C, 2.16 kg, ISO 1133) in the range of 0.001 to 1.5 g/10 min, preferably of 0.005 to 1.0 g/10 min, more preferably of 0.01 to 0.8 g/10 min and even more preferably of 0.02 to 0.5 g/10 min.

The $MFR_2$ (190°C, 2.16 kg, ISO 1133) of the multimodal metallocene catalysed linear low density polyethylene (mLLDPE) is in the range of 0.1 to 2.5 g/10 min, preferably 0.2 to 2.0 g/10 min, more preferably 0.3 to 1.5 g/10 min.

The multimodal metallocene catalysed linear low density polyethylene (mLLDPE) has a ratio of the $MFR_{21}$ (190°C, 21.6 kg, ISO 1133) to $MFR_2$ (190°C, 2.16 kg, ISO 1133), $MFR_{21}/MFR_2$, in the range of 21 to 100, preferably 24 to 60, more preferably 27 to 45.

In an embodiment of the invention it is preferred the ratio of the $MFR_2$ (190°C, 2.16 kg, ISO 1133) of ethylene-1-butene polymer component (A) to the $MFR_2$ (190°C, 2.16 kg, ISO 1133) of the final multimodal metallocene catalysed linear low density polyethylene (mLLDPE) is at least 3.0 to 120.0, preferably 3.5 to 100.0 and more preferably of 4.0 to 90.0.

Naturally, in addition to multimodality with respect to, i.e. difference between, the $MFR_2$ of ethylene polymer components (A) and (B), the multimodal PE of the invention can also be multimodal e.g. with respect to the density of the ethylene polymer components (A) and (B).

Preferably, the multimodal metallocene catalysed linear low density polyethylene (mLLDPE) is further multimodal with respect to the comonomer content of the ethylene polymer components (A) and (B).

The comonomer type for the polymer fractions (A-1) and (A-2) is the same, thus both fractions therefore have 1-butene as comonomer.

The comonomer content of component (A) and (B) can be measured, or, in case, and preferably, one of the components is produced first and the other thereafter in the presence of the first produced in so called multistage process, then the comonomer content of the first produced component, e.g. component (A), can be measured and the comonomer content of the other component, e.g. component (B), can be calculated according to following formula:

Comonomer content (wt%) in component B = (comonomer content (wt%) in final product - (weight fraction of component A * comonomer content (wt%) in component A))/(weight fraction of component B)

The total amount of 1-butene, based on the multimodal metallocene catalysed linear low density polyethylene (mLLDPE) is preferably in the range of 0.1 to 3.0 wt%, preferably 0.2 to 2.5 wt% and more preferably 0.3 to 2.0 wt%.

The total amount of 1-hexene, based on the multimodal metallocene catalysed linear low density polyethylene (mLLDPE) preferably is in the range of 2.0 to 20.0 wt%, preferably 4.0 to 18.0 wt% and more preferably 6.0 to 15.0 wt%.

The total amount (wt%) of 1-butene, present in the ethylene-1-butene polymer component (A) is of 0.5 to 8.0 wt%, preferably of 0.6 to 6.0 wt%, more preferably of 0.8 to 5.0 wt%, even more preferably of 1.0 to 4.0 wt%, based on the

ethylene-1-butene polymer component (A).

The total amount (wt%) of 1-hexene, present in the ethylene-1-hexene polymer component (B) is of 8.0 to 25.0 wt%, preferably of 9.0 to 22.0 wt%, more preferably of 10.0 to 20.0 wt%, based on the ethylene-1-hexene polymer component (B).

Even more preferably the multimodal metallocene catalysed linear low density polyethylene (mLLDPE) of the invention is further multimodal with respect to difference in density between the ethylene polymer component (A) and ethylene polymer component (B). Preferably, the density of ethylene polymer component (A) is different, preferably higher, than the density of the ethylene polymer component (B).

The density of the ethylene polymer component (A) is in the range of 920 to 950 kg/$m^3$, preferably of 925 to 948 kg/$m^3$, more preferably of 930 to 945 kg/$m^3$ and/or the density of the ethylene polymer component (B) is of in the range of 885 to 918 kg/$m^3$, preferably of 888 to 915 kg/$m^3$ and more preferably of 890 to 912 kg/$m^3$.

The polymer fraction (A-1) has a density in the range of 920 to 950 kg/$m^3$, preferably of 925 to 948 kg/$m^3$, more preferably of 930 to 946 kg/$m^3$, like 935 to 945 kg/$m^3$.

The density of the polymer fraction (A-2) is in the range of 920 to 950 kg/$m^3$, preferably of 925 to 945 kg/$m^3$.

The density of the multimodal metallocene catalysed linear low density polyethylene (mLLDPE) is in the range of 910 to 930 kg/$m^3$, preferably of 910 to 925 kg/$m^3$ and more preferably of 912.0 to 920.0 kg/$m^3$.

More preferably the multimodal metallocene catalysed linear low density polyethylene (mLLDPE) is multimodal at least with respect to, i.e. has a difference between, the $MFR_2$, the comonomer content as well as with respect to, i.e. has a difference between the density of the ethylene polymer components, (A) and (B), as defined above, below or in the claims including any of the preferable ranges or embodiments of the polymer composition.

It is within the scope of the invention, that the first and the second ethylene polymer fraction (A-1 and A-2) of the ethylene polymer component (A) are present in a weight ratio of 4:1 up to 1:4, such as 3:1 to 1:3, or 2:1 to 1:2, or 1:1.

The ethylene polymer component (A) is present in an amount of 30.0 to 70.0 wt% based on the multimodal metallocene catalysed linear low density polyethylene (mLLDPE), preferably in an amount of 32.0 to 55.0 wt% and even more preferably in an amount of 34.0 to 45.0 wt%. Thus, the ethylene polymer component (B) is present in an amount of 70.0 to 30.0 wt% based on the multimodal metallocene catalysed linear low density polyethylene (mLLDPE), preferably in an amount of 68.0 to 45.0 wt% and more preferably in an amount of 66.0 to 55.0 wt%.

The multimodal metallocene catalysed linear low density polyethylene (mLLDPE), can be produced in a 2-stage process, preferably comprising a slurry reactor (loop reactor ), whereby the slurry (loop) reactor is connected in series to a gas phase reactor (GPR), whereby either ethylene component (A) or ethylene component (B) is produced in the loop reactor and the other ethylene polymer component is then produced in GPR in the presence of the first produced ethylene polymer component to produce the multimodal metallocene catalysed linear low density polyethylene (mLLDPE), preferably the ethylene polymer component (A) is produced in the loop reactor and the ethylene polymer component (B) is produced in GPR in the presence of the ethylene polymer component (A) to produce the multimodal metallocene catalysed linear low density polyethylene (mLLDPE).

In case that the ethylene component (A) of the multimodal metallocene catalysed linear low density polyethylene (mLLDPE) consists of ethylene polymer fractions (A-1) and (A-2), the multimodal metallocene catalysed linear low density polyethylene (mLLDPE) can be produced with a 3-stage process, preferably comprising a first slurry reactor (loop reactor 1), whereby the first slurry loop reactor is connected in series with another slurry reactor (loop reactor 2), so that the first ethylene polymer fraction (A-1) produced in the loop reactor 1 is fed to the loop reactor 2, wherein the second ethylene polymer fraction (A-2) is produced in the presence of the first fraction (A-1). It is possible that fraction (A-1) is produced first and then fraction (A-2) is produced in the presence of fraction (A-1) in a subsequent reactor or vice versa, i.e. fraction (A-2) is produced first and then fraction (A-1) is produced in the presence of fraction (A-2) in a subsequent reactor. Preferably fraction (A-1) is produced first.

The loop reactor 2 is thereby connected in series to a gas phase reactor (GPR), so that the first ethylene polymer component (A) leaving the second slurry reactor is fed to the GPR to produce a trimodal polyethylene copolymer. In this case, the reaction conditions in the two slurry reactors are chosen in a way that in the two slurry reactors different products in view of MFR and/or density are produced.

Such a process is described inter alia in WO 2016/198273, WO 2021009189, WO 2021009190, WO 2021009191 and WO 2021009192. Full details of how to prepare suitable multimodal metallocene catalysed linear low density polyethylene (mLLDPE) can be found in these references.

A suitable process is the Borstar PE process or the Borstar PE 3G process.

The multimodal metallocene catalysed linear low density polyethylene (mLLDPE) according to the present invention is therefore preferably produced in a loop loop gas cascade. Such polymerization steps may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is preferably conducted in slurry and the amount of polymer produced in an optional prepolymerization step is counted to the amount

(wt%) of ethylene polymer component (A).

The catalyst components are preferably all introduced to the prepolymerization step when a prepolymerization step is present. However, where the solid catalyst component and the cocatalyst can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is understood within the scope of the invention, that the amount or polymer produced in the prepolymerization lies within 1 to 5 wt% in respect to the final metallocene catalysed multimodal metallocene catalysed linear low density polyethylene (mLLDPE). This can counted as part of the first ethylene polymer component (A).

*Catalyst*

The multimodal metallocene catalysed linear low density polyethylene (mLLDPE) used in the process of the invention is one made using a metallocene catalyst. A metallocene catalyst comprises a metallocene complex and a cocatalyst. The metallocene compound or complex is referred herein also as organometallic compound (C).

The organometallic compound (C) comprises a transition metal (M) of Group 3 to 10 of the Periodic Table (IUPAC 2007) or of an actinide or lanthanide.

The term "an organometallic compound (C)" in accordance with the present invention includes any metallocene or non-metallocene compound of a transition metal, which bears at least one organic (coordination) ligand and exhibits the catalytic activity alone or together with a cocatalyst. The transition metal compounds are well known in the art and the present invention covers compounds of metals from Group 3 to 10, e.g. Group 3 to 7, or 3 to 6, such as Group 4 to 6 of the Periodic Table, (IUPAC 2007), as well as lanthanides or actinides.

In an embodiment, the organometallic compound (C) has the following formula (I):

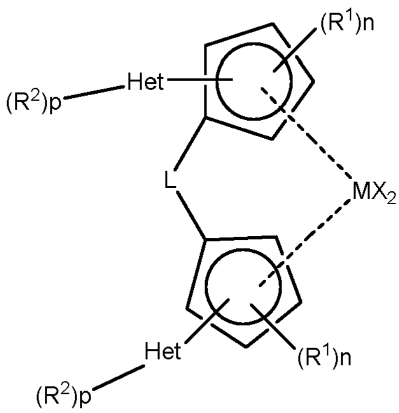

(I)

wherein each X is independently a halogen atom, a $C_{1-6}$-alkyl group, $C_{1-6}$-alkoxy group, phenyl or benzyl group;
each Het is independently a monocyclic heteroaromatic group containing at least one heteroatom selected from O or S;
L is $-R'_2Si-$, wherein each R' is independently $C_{1-20}$-hydrocarbyl or $C_{1-10}$-alkyl substituted with alkoxy having 1 to 10 carbon atoms;
M is Ti, Zr or Hf;
each $R^1$ is the same or different and is a $C_{1-6}$-alkyl group or $C_{1-6}$-alkoxy group;
each n is 1 to 2;
each $R^2$ is the same or different and is a $C_{1-6}$-alkyl group, $C_{1-6}$-alkoxy group or $-Si(R)_3$ group; each R is $C_{1-10}$-alkyl or phenyl group optionally substituted by 1 to 3 $C_{1-6}$-alkyl groups; and each p is 0 to 1.

Preferably, the compound of formula (I) has the structure

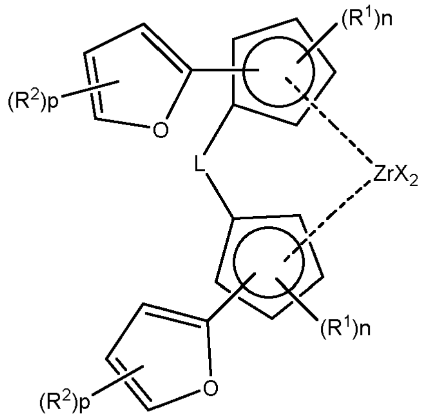

(I´)

wherein each X is independently a halogen atom, a $C_{1-6}$-alkyl group, $C_{1-6}$-alkoxy group, phenyl or benzyl group;
L is a $Me_2Si$-;
each $R^1$ is the same or different and is a $C_{1-6}$-alkyl group, e.g. methyl or t-Bu;
each n is 1 to 2;
$R^2$ is a -$Si(R)_3$ alkyl group; each p is 1;
each R is $C_{1-6}$-alkyl or phenyl group.

Highly preferred complexes of formula (I) are

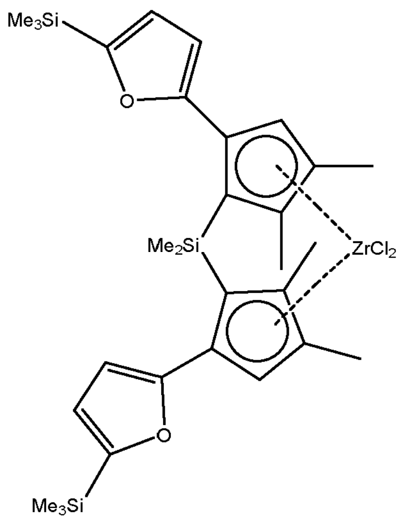

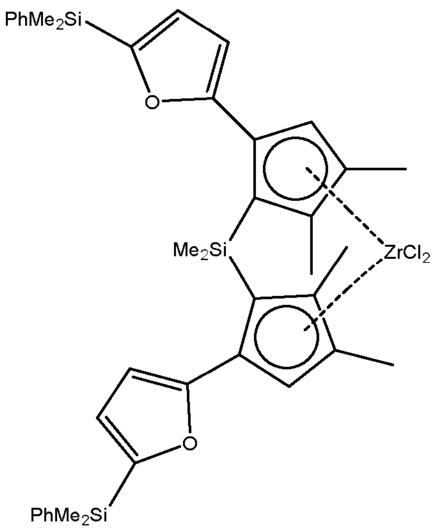

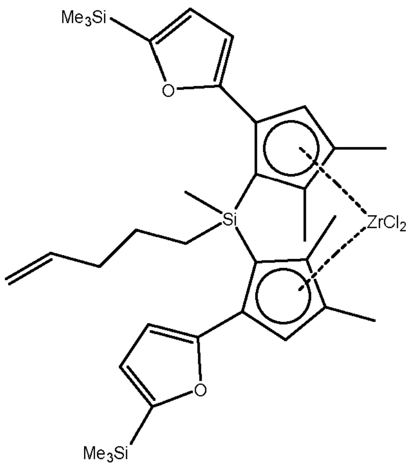

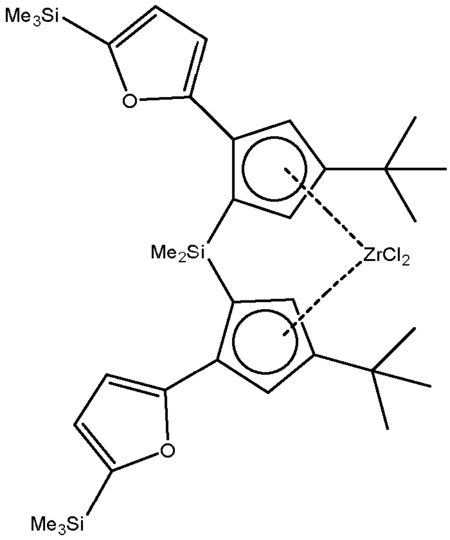

Most preferably the complex dimethylsilanediylbis[2-(5-trimethylsilylfuran-2-yl)-4,5-dimethylcyclopentadien-1-yl] zirconium dichloride is used.

More preferably the ethylene polymer components (A) and (B) of the multimodal metallocene catalysed linear low density polyethylene (mLLDPE) are produced using, i.e. in the presence of, the same metallocene catalyst.

To form a catalyst, a cocatalyst, also known as an activator, is used, as is well known in the art. Cocatalysts comprising Al or B are well known and can be used here. The use of aluminoxanes (e.g. MAO) or boron based cocatalysts (such as borates) is preferred.

Polyethylene copolymers made using single site catalysis, as opposed to Ziegler Natta catalysis, have characteristic features that allow them to be distinguished from Ziegler Natta materials. In particular, the comonomer distribution is more homogeneous. This can be shown using TREF or Crystaf techniques. Catalyst residues may also indicate the catalyst used. Ziegler Natta catalysts would not contain a Zr or Hf group (IV) metal for example.

The multimodal metallocene catalysed linear low density polyethylene (mLLDPE) may contain further polymer components and optionally additives and/or fillers. In case the multimodal metallocene catalysed linear low density polyethylene (mLLDPE) contains further polymer components, then the amount of the further polymer component(s) typically varies between 3.0 to 20.0 wt% based on the combined amount of the multimodal metallocene catalysed linear low density polyethylene (mLLDPE) and the other polymer component(s).

The optional additives and fillers and the used amounts thereof are conventional in the field of film applications. Examples of such additives are, among others, antioxidants, process stabilizers, UV-stabilizers, pigments, fillers, antistatic additives, antiblock agents, nucleating agents, acid scavengers as well as polymer processing agent (PPA).

It is understood herein that any of the additives and/or fillers can optionally be added in socalled master batch, which comprises the respective additive(s) together with a carrier polymer. In such case the carrier polymer is not calculated to the polymer components of the multimodal metallocene catalysed linear low density polyethylene (mLLDPE), but to the amount of the respective additive(s), based on the total amount of the multimodal metallocene catalysed linear low density polyethylene (mLLDPE) (100 wt%).

As mentioned above, the polyethylene blend according to the present invention provides well-balanced mechanical properties, especially dart drop (impact strength) and tensile modulus and additionally protrusion puncture resistance to films comprising the blend.

The invention is therefore further direct to films comprising the above defined polyethylene blend.

**Film**

The film of the invention comprises at least one layer comprising the above defined polyethylene blend. The film can be a monolayer film comprising the above defined polyethylene blend or a multilayer film, wherein at least one layer comprises the above defined polyethylene blend. The terms "monolayer film" and multilayer film" have well known meanings in the art.

The films are preferably produced by any conventional film extrusion procedure known in the art including cast film and blown film extrusion. Most preferably, the film is a blown or cast film, especially a blown film. E.g. the blown film is produced by extrusion through an annular die and blowing into a tubular film by forming a bubble which is collapsed between nip rollers after solidification. This film can then be slit, cut or converted (e.g. gusseted) as desired. Conventional film production techniques may be used in this regard. If the preferable blown or cast film is a multilayer film then the various

layers are typically coextruded. The skilled man will be aware of suitable extrusion conditions.

Films according to the present invention may be subjected to post-treatment processes, e.g. surface modifications, lamination or orientation processes or the like. Such orientation processes can be mono-axially (MDO) or bi-axially orientation, wherein mono-axial orientation is preferred.

In another preferred embodiment, the films are unoriented.

Preferred films according to the invention are monolayer blown films.

The monolayer film of the invention may have a thickness of 20 to 120 μm, preferably 30 to 100 μm and more preferably 35 to 80 μm. Films of the invention are preferably not stretched in the machine or transverse or biaxial direction.

The films of the invention are characterized by a dart-drop impact strength (DDI) determined according to ASTM D1709, method A on a 40 μm monolayer test blown film of at least 200 g up to 1000 g , preferably 220 g up to 800 g and more preferably 240 g up to 500 g.

Films according to the present invention furthermore have good stiffness (tensile modulus measured on a 40 μm monolayer test blown film according to ISO 527-3), i.e. >150MPa (in both directions).

Thus, the films comprising the metallocene catalysed multimodal copolymer (P) may further or in addition have a tensile modulus (measured on a 40 μm monolayer test blown film according to ISO 527-3) in machine (MD) as well as in transverse (TD) direction in the range of from >150MPa to 350 MPa, preferably of from 170 MPa to 300 MPa.

In one further embodiment of the present invention, the optomechanical ability (OMA) according to formula (II):

$$OMA = \frac{Tensile\ Modulus\ (MD)[MPa] * DDI(g)}{Haze\ (40\ \mu m)[\%]}$$

determined on 40 μm test blown film is at least 1200 [MPa*g/%] up to 5000 [MPa*g/%], preferably in the range of from 1300 [MPa*g/%] up to 4000 [MPa*g/%], more preferably in the range of from 1400 [MPa*g/%] up to 3000 [MPa*g/%], wherein the Tensile Modulus in machine direction is measured according to ISO 527-3 at 23°C on 40 μm test blown films , DDI is the dart-drop impact strength determined according to ASTM D1709, method A on a 40 μm test blown film and haze is measured according to ASTM D1003 on a 40 μm test blown film.

Thus, in a preferred embodiment, the films comprising the polyethylene blend as described above, preferably have by having at least

a) a dart-drop impact strength (DDI) determined according to ASTM D1709, method A on a 40 μm monolayer test blown film of at least 200 g up to 1000 g , preferably 220 g up to 800 g and more preferably 240 g up to 500 g, and
b) an optomechanical ability (OMA) according to formula (II):

$$OMA = \frac{Tensile\ Modulus\ (MD)[MPa] * DDI(g)}{Haze\ (40\ \mu m)[\%]}$$

determined on 40 μm test blown film is at least 1200 [MPa*g/%] up to 5000 [MPa*g/%], preferably in the range of from 1300 [MPa*g/%] up to 4000 [MPa*g/%], more preferably in the range of from 1400 [MPa*g/%] up to 3000 [MPa*g/%], wherein the Tensile Modulus in machine direction is measured according to ISO 527-3 at 23°C on 40 μm test blown films , DDI is the dart-drop impact strength determined according to ASTM D1709, method A on a 40 μm test blown film and haze is measured according to ASTM D1003 on a 40 μm test blown film.

Additionally, a film comprising the polyethylene blend according to the invention preferably has a puncture resistance - maximum force (PRF-max) of at least 50 N, more preferably at least 52 N, and most preferably at least 55 N, when measured on a 40 μm test blown film according to ASTM D5758 at a test speed of 250 mm/min. The upper limit of the puncture resistance - maximum force (PRF-max) is usually not higher than 70 N, preferably not higher than 65 N.

In an embodiment of the present invention the monolayer blown films are characterized by having

a) a dart-drop impact strength (DDI) determined according to ASTM D1709, method A on a 40 μm monolayer test blown film of at least 240 g up to 1000 g , preferably 250 g up to 800 g, and/or
b) an optomechanical ability (OMA) according to formula (I):

$$OMA = \frac{Tensile\ Modulus\ (MD)[MPa] * DDI(g)}{Haze\ (40\ \mu m)[\%]}$$

of films determined on 40 μm test blown film is at least 1650 [MPa*g/%] up to 5000 [MPa*g/%], preferably in the range

of from 1700 [MPa*g/%] up to 4000 [MPa*g/%], wherein the Tensile Modulus in machine direction is measured according to ISO 527-3 at 23°C on 40 μm test blown films , DDI is the dart-drop impact strength determined according to ASTM D1709, method A on a 40 μm test blown film and haze is measured according to ASTM D1003 on a 40 μm test blown film and/or

c) a puncture resistance - maximum force (PRF-max) of at least 54 N up to 70N, preferably at least 55 N up to 65 N, when measured on a 40 μm test blown film according to ASTM D5758 at a test speed of 250 mm/min.

In this embodiment it is preferred if the film has at least two of the properties a), b) or c), more preferably the film has all of the properties a), b) and c).

The inventive films are fully recyclable and thus improves sustainability, as it is in the most preferred embodiment a "100% PE" solution with no other polymer than ethylene based polymers being present.

In another embodiment the inventive film contains at least 90 wt% of PE polymers, more preferably 95 to 99 wt% of PE polymers (difference to 100 wt% can be other polymers than PE), and is thus also suitable for being recycled.

The films according to the present invention are highly useful for being used in various packaging applications, wherein applications related to food packaging are preferred. Furthermore the films according to the present invention may be used as a layer in multilayer polyethylene based blown films, preferably as core layer in multilayer polyethylene based blown films.

The invention will be further described with reference to the following non-limiting examples.

## Determination methods

Unless otherwise stated in the description or in the experimental part, the following methods were used for the property determinations of the polymers (including its fractions and components) and/or any sample preparations thereof as specified in the text or experimental part.

Melt Flow Rate

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylene. MFR may be determined at different loadings such as 2.16 kg ($MFR_2$), 5 kg ($MFR_5$) or 21.6 kg ($MFR_{21}$).

*Calculation of $MFR_2$ of Component B and of Fraction (A-2)*

$$\log A = x \cdot \log B + (1 - x) \cdot \log C$$

$$C = 10^{\wedge}\frac{(\log A - x.\log B)}{(1-x)}$$

*For Component B:*

B = $MFR_2$ of Component (A)
C = $MFR_2$ of Component (B)
A = final $MFR_2$ (mixture) of multimodal polyethylene copolymer (P)
X = weight fraction of Component (A).

*For Fraction (A-2):*

B = $MFR_2$ of 1$^{st}$ fraction (A-1)
C = $MFR_2$ of 2$^{nd}$ fraction (A-2)
A = final $MFR_2$ (mixture) of loop polymer (= Component (A))

X = weight fraction of the 1st fraction (A-1).

**Density**

Density of the polymer was measured according to ASTM; D792, Method B (density by balance at 23°C) on compression moulded specimen prepared according to EN ISO 1872-2 (February 2007) and is given in kg/m$^3$.

**Comonomer contents:**

**Quantification of microstructure by NMR spectroscopy**

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Advance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification.{klimke06, parkinson07, castignolles09} Standard single-pulse excitation was employed utilising the NOE at short recycle delays{pollard04, klimke06} and the RS-HEPT decoupling scheme{fillip05,griffin07}. A total of 1024 (1k) transients were acquired per spectra. Quantitative $^{13}C\{^1H\}$ NMR spectra were processed, integrated and relevant quantitative properties determined from the integrals. All chemical shifts are internally referenced to the bulk methylene signal (δ+) at 30.00 ppm.

The amount of ethylene was quantified using the integral of the methylene (δ+) sites at 30.00 ppm accounting for the number of reporting sites per monomer:

$$E = I_{\delta+} / 2$$

the presence of isolated comonomer units is corrected for based on the number of isolated comonomer units present:

$$Etotal = E + (3*B + 2*H) / 2$$

where B and H are defined for their respective comonomers. Correction for consecutive and non-consecutive commoner incorporation, when present, is undertaken in a similar way. Characteristic signals corresponding to the incorporation of 1-butene were observed and the comonomer fraction calculated as the fraction of 1-butene in the polymer with respect to all monomer in the polymer:

$$fBtotal = (Btotal / (Etotal + Btotal + Htotal)$$

The amount isolated 1-butene incorporated in EEBEE sequences was quantified using the integral of the *B2 sites at 38.3 ppm accounting for the number of reporting sites per comonomer:

$$B = I_{*B2}$$

The amount consecutively incorporated 1-butene in EEBBEE sequences was quantified using the integral of the ααB2B2 site at 39.4 ppm accounting for the number of reporting sites per comonomer:

$$BB = 2 * I\alpha\alpha B2B2$$

The amount non consecutively incorporated 1-butene in EEBEBEE sequences was quantified using the integral of the ββB2B2 site at 24.7 ppm accounting for the number of reporting sites per comonomer:

$$BEB = 2 * I\beta\beta B2B2$$

Due to the overlap of the *B2 and *βB2B2 sites of isolated (EEBEE) and non-consecutivly incorporated (EEBEBEE) 1-butene respectively the total amount of isolated 1-butene incorporation is corrected based on the amount

of non-consecutive 1-butene present:

$$B = I_{*B2} - 2 * I_{\beta\beta B2B2}$$

The total 1-butene content was calculated based on the sum of isolated, consecutive and non consecutively incorporated 1-butene:

$$Btotal = B + BB + BEB$$

The total mole fraction of 1-butene in the polymer was then calculated as:

$$fB = (Btotal / ( Etotal + Btotal + Htotal)$$

Characteristic signals corresponding to the incorporation of 1-hexene were observed and the comonomer fraction calculated as the fraction of 1-hexene in the polymer with respect to all monomer in the polymer:

$$fHtotal = (Htotal / (Etotal + Btotal + Htotal)$$

The amount isolated 1-hexene incorporated in EEHEE sequences was quantified using the integral of the $*B4$ sites at 39.9 ppm accounting for the number of reporting sites per comonomer:

$$H = I_{*B4}$$

The amount consecutively incorporated 1-hexene in EEHHEE sequences was quantified using the integral of the $\alpha\alpha B4B4$ site at 40.5 ppm accounting for the number of reporting sites per comonomer:

$$HH = 2 * I\alpha\alpha B4B4$$

The amount non consecutively incorporated 1-hexene in EEHEHEE sequences was quantified using the integral of the $\beta\beta B4B4$ site at 24.7 ppm accounting for the number of reporting sites per comonomer:

$$HEH = 2 * I\beta\beta B4B4$$

The total mole fraction of 1-hexene in the polymer was then calculated as:

$$fH = (Htotal / (Etotal + Btotal + Htotal)$$

The mole percent comonomer incorporation is calculated from the mole fraction:

$$B [mol\%] = 100 * fB$$

$$H [mol\%] = 100 * fH$$

The weight percent comonomer incorporation is calculated from the mole fraction:

$$B [wt\%] = 100 * ( fB * 56.11) / ( (fB * 56.11) + (fH * 84.16) + ((1-(fB + fH)) * 28.05) )$$

$$H [wt\%] = 100 * ( fH * 84.16 ) / ( (fB * 56.11) + (fH * 84.16) + ((1-(fB + fH)) * 28.05) )$$

References:

Klimke, K., Parkinson, M., Piel, C., Kaminsky, W., Spiess, H.W., Wilhelm, M., Macromol. Chem. Phys. 2006;207:382.

Parkinson, M., Klimke, K., Spiess, H.W., Wilhelm, M., Macromol. Chem. Phys. 2007;208:2128. Pollard, M., Klimke, K., Graf, R., Spiess, H.W., Wilhelm, M., Sperber, O., Piel, C., Kaminsky, W., Macromolecules 2004;37:813.
Filip, X., Tripon, C., Filip, C., J. Mag. Resn. 2005, 176, 239.
Griffin, J.M., Tripon, C., Samoson, A., Filip, C., and Brown, S.P., Mag. Res. in Chem. 2007 45, S1, S198.
Castignolles, P., Graf, R., Parkinson, M., Wilhelm, M., Gaborieau, M., Polymer 50 (2009) 2373 Busico, V., Cipullo, R., Prog. Polym. Sci. 26 (2001) 443.
Busico, V., Cipullo, R., Monaco, G., Vacatello, M., Segre, A.L., Macromoleucles 30 (1997) 6251.
Zhou, Z., Kuemmerle, R., Qiu, X., Redwine, D., Cong, R., Taha, A., Baugh, D. Winniford, B., J. Mag. Reson. 187 (2007) 225.
Busico, V., Carbonniere, P., Cipullo, R., Pellecchia, R., Severn, J., Talarico, G., Macromol. Rapid Commun. 2007, 28, 1128.
Resconi, L., Cavallo, L., Fait, A., Piemontesi, F., Chem. Rev. 2000, 100, 1253.

Dart drop strength (DDI): Impact resistance by free-falling dart method

This test method covers the determination of the energy that causes films to fail under specified conditions of impact of a free-falling dart from a specified height that would result in failure of 50 % of the specimens tested (ASTM D1709; Alternative testing technique - method A).

By this technique, successive groups of twenty specimens each are tested. One missile weight is employed for each group and missile weight is varied in increments from group to group.

Deviating from ASTM D1709-16a the test was performed on several film strips of a sample with at least 4 different weights. 20 specimens per weight were tested, so that a break range of 5 % - 95 % was covered. It must be ensured that at least one weight is determined in the breaking range of 5 % - 25 %, at least two weights in the breaking range of 30 % - 70 %, and at least one weight in the breaking range of 75 % - 95 %. The selection of the weights can be done in uneven steps. A film strip was taken across the width of the sample and measured on a thickness measuring device.

Standard conditions:

Conditioning time: > 96 h
Test temperature: 23 °C
Dart head material: phenolic
Dart diameter: 38 mm
Drop height: 660 mm

Results:

Impact failure weight - 50% [g].

**Tensile modulus**

Tensile modulus (E-Mod (MPa) was measured in machine and/or transverse direction according to ISO 527-3 on film samples prepared as described under the Film Sample preparation with film thickness of 40 μm and at a cross head speed of 1 mm/min for the modulus.

**Haze**

Haze was determined according to ASTM D 1003-00 on films as produced indicated below.

**Protrusion Puncture Resistance**

Protrusion Puncture Resistance testing was conducted according to ASTM D5748 on 40 μm blown films.

The Puncture Resistance Force (N) is the maximum force or highest force observed during the test and Puncture Resistance Energy (J) is the energy used until the probe breaks the test specimen, both are measured using the high accuracy 500N loadcell and crosshead position sensor.

**Optomechanical ability (OMA)** was determined on 40 μm test blown film and was calculated according to

formula (II):

$$OMA = \frac{Tensile\ Modulus\ (MD)[MPa] * DDI(g)}{Haze\ (40\ \mu m)[\%]}$$

wherein the Tensile Modulus in machine direction was measured according to ISO 527-3 at 23°C, DDI is the dart-drop impact strength determined according to ASTM D1709, method A and haze was measured according to ASTM D1003.

**Film sample preparation**

The test films consisting of the inventive blend and respective comparative polymers of 40 μm thickness, were prepared using a Collin 30 lab scale mono layer blown film line.The film samples were produced at 194°C, a 1:2.5 blow-up ratio, frostline distance of 120 mm. Blending was done directly on the film extrusion line.

**Examples:**

*Materials used:*

As LDPE:

FA3200: a non-additivated low density polyethylene homopolymer produced by an autoclave high pressure process, commercially available from Borealis AG. It has $MFR_2$ 0.25 g/10min and density 920 kg/$m^3$.

For Comparative Example CE2 as mLLDPE: Anteo™ FK1820: bimodal ethylene/1-butene/1-hexene terpolymer with a density of 918 kg/$m^3$, $MFR_2$ (190°C/2.16kg) of 1.5 g/10min, Tm 122°C, produced with a metallocene catalyst; commercially available from Borouge. It contains antioxidant and processing aid.

**Cat.Example: Catalyst preparation**

*Loading of SiO2:*

10 kg of silica (PQ Corporation ES757, calcined 600°C) was added from a feeding drum and inertized in the reactor until $O_2$ level below 2 ppm was reached.

*Preparation of MAO/tol/MC:*

30 wt% MAO in toluene (14.1 kg) was added into another reactor from a balance followed by toluene (4.0 kg) at 25°C (oil circulation temp) and stirring 95 rpm. Stirring speed was increased 95 rpm -> 200 rpm after toluene addition, stirring time 30 min. Metallocene Rac-dimethylsilanediylbis{2-(5-(trimethylsilyl)furan-2-yl)-4,5-dimethylcyclopentadien-1-yl}zirconium dichloride 477 g was added from a metal cylinder followed by flushing with 4 kg toluene (total toluene amount 8.0 kg). Reactor stirring speed was changed to 95 rpm for MC feeding and returned back to 200 rpm for 3 h reaction time. After reaction time MAO/tol/MC solution was transferred into a feeding vessel.

*Preparation of catalyst:*

Reactor temperature was set to 10°C (oil circulation temp) and stirring was turned to 40 rpm during MAO/tol/MC addition. MAO/tol/MC solution (22.2 kg) was added within 205 min followed by 60 min stirring time (oil circulation temp was set to 25°C). After stirring "dry mixture" was stabilised for 12 h at 25°C (oil circulation temp), stirring 0 rpm. Reactor was turned 20° (back and forth) and stirring was turned on 5 rpm for few rounds once an hour.

After stabilisation the catalyst was dried at 60°C (oil circulation temp) for 2 h under nitrogen flow 2 kg/h, followed by 13 h under vacuum (same nitrogen flow with stirring 5 rpm). Dried catalyst was sampled and HC content was measured in the glove box with Sartorius Moisture Analyser, (Model MA45) using thermogravimetric method. Target HC level was < 2% (actual 1.3 %).

**Polymerization:**

Borstar pilot plant with a 3-reactor set-up (loop1 - loop2 - GPR 1) and a prepolymerization loop reactor.

mLLDPEs (mLLDPE1 - mLLDPE4) (for IE1, IE2, IE3, IE4 and IE5) were produced by using the polymerization conditions as given in Table 1.

**Table 1:** Polymerization conditions for mLLDPE-1, mLLDPE-2, mLLDPE-3 and mLLDPE-4

| | mLLDPE-1 for IE1 | mLLDPE-2 for IE2 | mLLDPE-3 for IE3 | mLLDPE-4 for IE4 and IE5 |
|---|---|---|---|---|
| **Prepoly reactor** | | | | |
| Catalyst feed (g/h) | 32 | 35 | 27.4 | 34 |
| Temp. (°C) | 50 | 50 | 50 | 50 |
| Press. (kPa) | 5606 | 5617 | 5636 | 5621 |
| C2 (kg/h) | 4.0 | 4.0 | 4.0 | 4,0 |
| H2(g/h) | 0.03 | 0.03 | 0.03 | 0,0 |
| C4 (g/h) | 78.8 | 80.6 | 91.2 | 93.7 |
| Split (wt%) | 3.6 | 3.5 | 3.6 | 3.6 |
| **loop 1 Fraction (A-1)** | | | | |
| Temp. (°C) | 85 | 85 | 85 | 85 |
| Press. (kPa) | 5606 | 5537 | 5542 | 5534 |
| C2 conc. (mol%) | 4.0 | 3.7 | 4.4 | 4.3 |
| H2/C2 ratio (mol/kmol) | 0.39 | 0.50 | 0.46 | 0.89 |
| C4/C2 ratio (mol/kmol) | 41.0 | 40 | 43.5 | 77.9 |
| Split (wt%) | 17.9 | 17.8 | 18.2 | 18.4 |
| Density (kg/m3) of loop 1 material (fraction (A-1)) | 940.1 | 943 | 941.4 | 939.4 |
| MFR2 (g/10 min) of loop 1 material (fraction (A-1)) | 2.2 | 10.0 | 6.9 | 35.0 |
| **loop 2** | | | | |
| Temp. (°C) | 85 | 85 | 85 | 85 |
| Press. (kPa) | 5335 | 5337 | 5345 | 5349 |
| C2 conc. (mol%) | 4.2 | 4.1 | 3.8 | 4.3 |
| H2/C2 ratio (mol/kmol) | 0.5 | 0.5 | 0.39 | 0.7 |
| C4/C2 ratio (mol/kmol) | 27 | 28 | 32.9 | 50 |
| Split (wt%) | 20.7 | 20 | 20.1 | 19.8 |
| Density (kg/m3) after loop 2 (component (A)) | 940.3 | 942.3 | 940.3 | 940.9 |
| MFR2 (g/10 min) after loop 2 (component (A)) | 4.7 | 7.5 | 7.3 | 46.0 |
| MFR2 (g/10 min) of loop 2 material (fraction (A-2)) | 10.4 | 5.5 | 7.8 | 62.6 |
| Density (kg/m3) of loop 2 material (fraction (A-2)) | 940.5 | 941 | 939.1 | 942.6 |
| C4 (wt%) after loop 2 material (Component (A)) | 1.19 | 1.21 | 1.20 | 2.16 |
| **GPR** | | | | |

| | | | | |
|---|---|---|---|---|
| Temp. (°C) | 75 | 75 | 75 | 75 |
| Press. (kPa) | 2000 | 2000 | 2000 | 2000 |
| H2/C2 ratio (mol/kmol) | 1.02 | 1.05 | 0.75 | 0.72 |
| C6/C2 ratio (mol/kmol) | 11.78 | 14.04 | 9.58 | 10.24 |
| Split (wt%) | 57.9 | 58.7 | 58.2 | 58.3 |
| MFR2 (g/10 min) of GPR material (Component (B)) | 0.3 | 0.3 | 0.09 | 0.04 |
| Density (kg/m3) of GPR material (Component (B)) | 900 | 891 | 904.4 | 898.9 |
| C6 (wt%) of GPR material Component (B)) | 12.08 | 18.23 | 12.01 | 14.41 |

The polymers were mixed with 2400 ppm of Irganox B561 and 270 ppm of Dynamar FX 5922 compounded and extruded under nitrogen atmosphere to pellets by using a JSW extruder so that the SEI was 230 kWh/kg and the melt temperature 250°C.

**Table 2:** Material properties of mLLDPE-1, mLLDPE-2, mLLDPE-3, mLLDPE-4 and Comparative LLDPE FK1820

| **Material** | **mLLDPE-1** | **mLLDPE-2** | **mLLDPE-3** | **mLLDPE-4** | **FK1820** |
|---|---|---|---|---|---|
| $MFR_2$ (g/10 min) (final) | 1.0 | 1.0 | 0.58 | 0.56 | 1.5 |
| $MFR_{21}$ (g/10 min) | 29.6 | 30.1 | 18.9 | 22.6 | 27.1 |
| $MFR_{21}/MFR_2$ | 29.6 | 30.1 | 32.6 | 40.4 | 18.1 |
| Density (kg/m$^3$) | 917 | 913 | 919 | 916 | 918 |
| C4 (wt%) | 0.5 | 0.5 | 0.5 | 0.9 | 0.6 |
| C6 (wt%) | 7.0 | 10.9 | 7.0 | 8.4 | 7.7 |
| $MFR_2$(A)/$MFR_2$(final) | 4.7 | 7.5 | 12.6 | 82.1 | 2.9 |

**Monolayer blown films**

The above produced mLLDPEs were blended with FA3200 directly on the film extrusion line. The following films have been produced with the above described method (film sample preparation).

**Table 3:** Inventive and Comparative Films

| | | CE1 | CE2 | IE1 | IE2 | IE3 | IE4 | IE5 |
|---|---|---|---|---|---|---|---|---|
| FA3200 | wt% | 100 | 70 | 70 | 70 | 70 | 70 | 90 |
| FK1820 | wt% | - | 30 | - | - | - | - | - |
| mLLDPE-1 | wt% | | | 30 | | | | |
| mLLDPE-2 | wt% | | | | 30 | | | |
| mLLDPE-3 | wt% | | | | | 30 | | |
| mLLDPE-4 | wt% | | | | | | 30 | 10 |
| TM/MD | MPa | 168 | 193 | 196 | 177 | 192 | 187 | 179 |
| TM/TD | MPa | 208 | 247 | 227 | 211 | 228 | 226 | 205 |
| DDI | g | 173 | 234 | 251 | 297 | 276 | 355 | 249 |
| Haze | % | 33.0 | 28.1 | 29.5 | 30.3 | 28.2 | 27.8 | 30.3 |
| Protrusion | N | 48.3 | 51.4 | 56.8 | 58.0 | 61.1 | 57.2 | 52.9 |
| OMA | | 881 | 1607 | 1667 | 1735 | 1880 | 2388 | 1473 |

The data demonstrates that mLLDPE in general increases the mechanical properties and the overall performance (OMA) of LDPE (CE2 vs CE1). But using the specific mLLDPEs (mLLDPE 1-4) as blend partner for the LDPE, leads to even further improved mechanical properties and an improved balance of stiffness and toughness compared to films, where the Comparative mLLDPE has been used. Additionally it can be seen that even small amounts (i.e. 10 wt% (IE5) vs 30 wt%) of the specific mLLDPE already increases the performance of LDPE significantly.

**Claims**

**1.** A polyethylene blend comprising

a) 60.0 wt% to 99.0 wt%, based on the total weight of the polyethylene blend, of a low density polyethylene (LDPE) whereby said LDPE has
a density in the range of 910 to 930 kg/m$^3$ and
a $MFR_2$ (190°C, 2.16 kg, ISO 1133) in the range of 0.1 to 2.0 g/10 min; and
b) 1.0 wt% to 40.0 wt%, based on the total weight of the polyethylene blend, of a multimodal metallocene catalysed linear low density polyethylene (mLLDPE) which consists of

(i) 30.0 to 70.0 wt% of an ethylene-1-butene polymer component (A), and
(ii) 70.0 to 30.0 wt% of an ethylene-1-hexene polymer component (B), whereby the ethylene-1-butene polymer component (A) has

a density in the range of 920 to 950 kg/m$^3$, and
a $MFR_2$ (190°C, 2.16 kg, ISO 1133) in the range of 2.0 to 400.0 g/10 min, and

the ethylene polymer component (B) has

a density in the range of 885 to 918 kg/m$^3$, and
a $MFR_2$ (190°C, 2.16 kg, ISO 1133) in the range of 0.001 to 1.5 g/10 min,

whereby the multimodal metallocene catalysed linear low density polyethylene (mLLDPE) has
a density in the range of 910 to 930 kg/m$^3$,
a $MFR_2$ (190°C, 2.16 kg, ISO 1133) in the range of 0.1 to 2.5 g/10 min and
a ratio of the $MFR_{21}$ (190°C, 21.6 kg, ISO 1133) to $MFR_2$ (190°C, 2.16 kg, ISO 1133), $MFR_{21}/MFR_2$, in the range of 21 to 100.

**2.** The polyethylene blend according to claim 1, wherein in the multimodal metallocene catalysed linear low density polyethylene (mLLDPE) the ethylene-1-butene polymer component (A) consists of an ethylene polymer fraction (A-1) and an ethylene polymer fraction (A-2),

wherein the ethylene polymer fraction (A-1) has

a density in the range of 920 to 950 kg/m$^3$, preferably of 925 to 948 kg/m$^3$, more preferably of 930 to 946 kg/m$^3$; and
a $MFR_2$ (190°C, 2.16 kg, ISO 1133) in the range of 1.0 to 800.0 g/10 min, preferably of 1.5 to 400.0 g/10 min, more preferably of 1.8 to 200.0 g/10 min and even more preferably of 2.0 to 50.0 g/10 min, and

the ethylene polymer fraction (A-2) has

a density in the range of 920 to 950 kg/m$^3$, preferably of 925 to 945 kg/m$^3$, and
a $MFR_2$ (190°C, 2.16 kg, ISO 1133) in the range of 2.0 to 400.0 g/10 min, preferably of 2.5 to 200.0 g/10 min, more preferably of 3.0 to 100.0 g/10 min and most preferably of 3.5 to 80.0 g/10 min.

**3.** The polyethylene blend according to claim 1 or 2, wherein in the multimodal metallocene catalysed linear low density polyethylene (mLLDPE)

- the ethylene polymer component (A) has a $MFR_2$ (190°C, 2.16 kg, ISO 1133) of 2.5 to 300 g/10 min, preferably of 3.0 to 200 g/10 min and more preferably of 3.2 to 100 g/10 min and

- the ethylene polymer component (B) has a $MFR_2$ (190°C, 2.16 kg, ISO 1133) of 0.005 to 1.0 g/10 min, preferably of 0.01 to 0.8 g/10 min and more preferably of 0.02 to 0.5 g/10 min.

4. The polyethylene blend according to any of the preceding claims, wherein in the multimodal metallocene catalysed linear low density polyethylene (mLLDPE) the ratio of the $MFR_{21}$ (190°C, 21.6 kg, ISO 1133) to $MFR_2$ (190°C, 2.16 kg, ISO 1133), $MFR_{21}/MFR_2$ is in the range of from 24 to 60 and preferably from 27 to 45 and wherein the ratio of the $MFK_2$ of ethylene polymer component (A) to the $MFK_2$ of the flnal mLLDPE is at least 3.0 to 120.0, preferably 3.5 to 100.0 and more preferably of 4.0 to 90.0.

5. The polyethylene blend according to any of the preceding claims, wherein the multimodal metallocene catalysed linear low density polyethylene (mLLDPE) is produced in the presence of metallocene complex of formula (I):

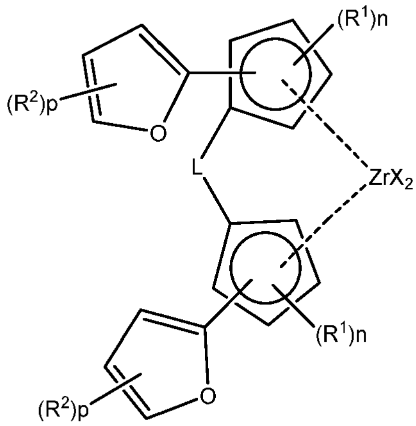

(I)

wherein each X is independently a halogen atom, a $C_{1-6}$-alkyl group, $C_{1-6}$-alkoxy group, phenyl or benzyl group;
each Het is independently a monocyclic heteroaromatic group containing at least one heteroatom selected from O or S;
L is -$R'_2$Si-, wherein each R' is independently $C_{1-20}$-hydrocarbyl or $C_{1-10}$-alkyl substituted with alkoxy having 1 to 10 carbon atoms;
M is Ti, Zr or Hf;
each $R_1$ is the same or different and is a $C_{1-6}$-alkyl group or $C_{1-6}$-alkoxy group; each n is 1 to 2;
each $R_2$ is the same or different and is a $C_{1-6}$-alkyl group, $C_{1-6}$-alkoxy group or - $Si(R)_3$ group;
each R is $C_{1-10}$-alkyl or phenyl group optionally substituted by 1 to 3 $C_{1-6}$-alkyl groups; and
each p is 0 to 1.

6. The polyethylene blend according to any of the preceding claims, wherein the LDPE has a $MFR_2$ (190°C, 2.16 kg, ISO 1133) in the range of 0.15 to 1.5 g/10 min, preferably in the range of 0.20 to 1.0 g/10 min, more preferably in the range of 0.20 to 0.70 g/10min and a density determined according to ISO 1183 in the range of 913 to 930 kg/$m^3$ and preferably in the range of 914 to 930 kg/$m^3$ and more preferably in the range of 914 to 925 kg/$m^3$.

7. The polyethylene blend according to any of the preceding claims, wherein the blend consists of

a) 65.0 to 95.0 wt%, preferably 70.0 wt% to 90.0 wt%, based on the total weight of the polyethylene blend, of the low density polyethylene (LDPE) and
b) 5.0 wt% to 35.0 wt%, preferably 10.0 wt% to 30.0 wt%, based on the total weight of the polyethylene blend, of the multimodal metallocene catalysed linear low density polyethylene (mLLDPE), thus the total amounts of a) + b) summing up to 100 wt% or

wherein the blend consists of

a) 70.0 wt% to 85.0 wt%, preferably 70.0 to 80.0 wt%, based on the total weight of the polyethylene blend, of the low density polyethylene (LDPE) and
b) 15.0 wt% to 30.0 wt%, preferably 20.0 wt% to 30.0 wt%, based on the total weight of the polyethylene blend, of the multimodal metallocene catalysed linear low density polyethylene (mLLDPE), the total amounts of a) + b)

summing up to 100 wt%.

**8.** Use of a polyethylene blend according to any of the preceding claims for the preparation of monolayer blown films.

**9.** A monolayer blown film, comprising a polyethylene blend according to any of the preceding claims 1 to 7, wherein the film preferably has at least

a) a drop impact strength (DDI) determined according to ASTM D1709, method A on a 40 μm monolayer test blown film of at least 200 g up to 1000 g, preferably 220 g up to 800 g and more preferably 240 g up to 500 g and
b) an optomechanical ability (OMA) according to formula (II):

$$OMA = \frac{Tensile\,Modulus\,(MD)[MPa] * DDI(g)}{Haze\,(40\,\mu m)[\%]}$$

determined on 40 μm test blown film is at least 1200 [MPa*g/%] up to 5000 [MPa*g/%], preferably in the range of from 1300 [MPa*g/%] up to 4000 [MPa*g/%], more preferably in the range of from 1400 [MPa*g/%] up to 3000 [MPa*g/%], wherein the Tensile Modulus in machine direction is measured according to ISO 527-3 at 23°C on 40 μm test blown films , DDI is the dart-drop impact strength determined according to ASTM D1709, method A on a 40 μm test blown film and haze is measured according to ASTM D1003 on a 40 μm test blown film.

**10.** The monolayer polyethylene blown film according to claim 9, wherein the film has in addition a puncture resistance - maximum force (PRF-max) of at least 50 N, more preferably at least 52 N, and most preferably at least 55 N, when measured on a 40 μm test blown film according to ASTM D5758 at a test speed of 250 mm/min.

**11.** A monolayer blown film, comprising a polyethylene blend according to any of the preceding claims 1 to 7, wherein the film is **characterized by** having

a) a dart-drop impact strength (DDI) determined according to ASTM D1709, method A on a 40 μm monolayer test blown film of at least 240 g up to 1000 g, preferably 250 g up to 800 g, and
b) an optomechanical ability (OMA) according to formula (II):

$$OMA = \frac{Tensile\,Modulus\,(MD)[MPa] * DDI(g)}{Haze\,(40\,\mu m)[\%]}$$

determined on 40 μm test blown film is at least 1650 [MPa*g/%] up to 5000 [MPa*g/%], preferably in the range of from 1700 [MPa*g/%] up to 4000 [MPa*g/%], wherein the Tensile Modulus in machine direction is measured according to ISO 527-3 at 23°C on 40 μm test blown films, DDI is the dart-drop impact strength determined according to ASTM D1709, method A on a 40 μm test blown film and haze is measured according to ASTM D1003 on a 40 μm test blown film and
c) a puncture resistance - maximum force (PRF-max) of at least 54 N up to 70N, preferably at least 55 N up to 65 N, when measured on a 40 μm test blown film according to ASTM D5758 at a test speed of 250 mm/min.

**12.** The monolayer blown film according to claim 11, wherein the film has at least two of the properties a), b) or c), preferably the film has all of the properties a), b) and c).

**13.** Use of a film according to any of the preceding claims 9 to 12 as packing material, in particular as a packing material for food.

**14.** Use of a film according to any of the preceding claims 9 to 12 as a layer in multilayer polyethylene based blown films, preferably as core layer in multilayer polyethylene based blown films.

**15.** A multilayer blown film comprising as a layer, preferably as core layer a film according to any of the preceding claims 9 to 12.

**Patentansprüche**

1. Polyethylenmischung, die umfasst

   a) 60,0 Gew.-% bis 99,0 Gew.-%, basiert auf dem Gesamtgewicht der Polyethylenmischung, eines Polyethylens niedriger Dichte (LDPE), wobei das LDPE aufweist

      eine Dichte im Bereich von 910 bis 930 kg/m$^3$ und
      einen $MFR_2$ (190 °C, 2,16 kg, ISO 1133) im Bereich von 0,1 bis 2,0 g/10 min; und

   b) 1,0 Gew.-% bis 40,0 Gew.-%, basiert auf dem Gesamtgewicht der Polyethylenmischung, eines multimodalen metallocenkatalysierten linearen Polyethylens niedriger Dichte (mLLDPE), bestehend aus

      (i) 30,0 bis 70,0 Gew.-% einer Ethylen-1-Buten-Polymerkomponente (A) und
      (ii) 70,0 bis 30,0 Gew.-% einer Ethylen-1-Hexen-Polymerkomponente (B), wobei die Ethylen-1-Buten-Polymerkomponente (A) aufweist

         eine Dichte im Bereich von 920 bis 950 kg/m$^3$ und
         einen $MFR_2$ (190 °C, 2,16 kg, ISO 1133) im Bereich von 2,0 bis 400,0 g/10 min, und

   die Ethylenpolymerkomponente (B)

      eine Dichte im Bereich von 885 bis 918 kg/m$^3$ und
      einen $MFR_2$ (190 °C, 2,16 kg, ISO 1133) im Bereich von 0,001 bis 1,5 g/10 min,

   wobei das multimodale metallocenkatalysierte lineare Polyethylen niedriger Dichte (mLLDPE) aufweist
   eine Dichte im Bereich von 910 bis 930 kg/m$^3$,
   einen $MFR_2$ (190 °C, 2,16 kg, ISO 1133) im Bereich von 0,1 bis 2,5 g/10 min und ein Verhältnis von $MFR_{21}$ (190 °C, 21,6 kg, ISO 1133) zu $MFR_2$ (190 °C, 2,16 kg, ISO 1133), $MFR_{21}/MFR_2$, im Bereich von 21 bis 100.

2. Polyethylenmischung nach Anspruch 1, wobei in dem multimodalen metallocenkatalysierten linearen Polyethylen niedriger Dichte (mLLDPE) die Ethylen-1-Buten-Komponente (A) aus einer Ethylenpolymerfraktion (A-1) und einer Ethylenpolymerfraktion (A-2) besteht,

   wobei die Ethylenpolymerfraktion (A-1) aufweist

      eine Dichte im Bereich von 920 bis 950 kg/m$^3$, bevorzugt von 925 bis 948 kg/m$^3$, stärker bevorzugt von 930 bis 946 kg/m$^3$; und
      einen $MFR_2$ (190 °C, 2,16 kg, ISO 1133) im Bereich von 1,0 bis 800,0 g/10 min, bevorzugt von 1,5 bis 400,0 g/10 min, stärker bevorzugt von 1,8 bis 200,0 g/10 min und noch stärker bevorzugt von 2,0 bis 50,0 g/10 min, und

   die Ethylenpolymerfraktion (A-2) aufweist

      eine Dichte im Bereich von 920 bis 950 kg/m$^3$, bevorzugt von 925 bis 945 kg/m$^3$, und
      einen $MFR_2$ (190 °C, 2,16 kg, ISO 1133) im Bereich von 2,0 bis 400,0 g/10 min, bevorzugt von 2,5 bis 200,0 g/10 min, stärker bevorzugt von 3,0 bis 100,0 g/10 min und am stärksten bevorzugt von 3,5 bis 80,0 g/10 min.

3. Polyethylenmischung nach Anspruch 1 oder 2, wobei in dem multimodalen metallocenkatalysierten linearen Polyethylen niedriger Dichte (mLLDPE)

   - die Ethylenpolymerkomponente (A) einen $MFR_2$ (190 °C, 2,16 kg, ISO 1133) von 2,5 bis 300 g/10 min, bevorzugt von 3,0 bis 200 g/10 min und stärker bevorzugt von 3,2 bis 100 g/10 min aufweist und
   - die Ethylenpolymerkomponente (B) einen $MFR_2$ (190 °C, 2,16 kg, ISO 1133) von 0,005 bis 1,0 g/10 min, bevorzugt von 0,01 bis 0,8 g/10 min und stärker bevorzugt von 0,02 bis 0,5 g/10 min aufweist.

4. Polyethylenmischung nach einem der vorstehenden Ansprüche, wobei in dem multimodalen metallocenkatalysierten linearen Polyethylen niedriger Dichte (mLLDPE) das Verhältnis von $MFR_{21}$ (190 °C, 21,6 kg, ISO 1133) zu $MFR_2$ (190

°C, 2,16 kg, ISO 1133), $MFR_{21}/MFR_2$, im Bereich von 24 bis 60 und bevorzugt von 27 bis 45 liegt und wobei das Verhältnis des $MFR_2$ der Ethylenpolymerkomponente (A) zum $MFR_2$ des finalen mLLDPE mindestens 3,0 bis 120,0, bevorzugt 3,5 bis 100,0 und stärker bevorzugt 4,0 bis 90,0 beträgt.

**5.** Polyethylenmischung nach einem der vorstehenden Ansprüche, wobei das multimodale metallocenkatalysierte lineare Polyethylen niedriger Dichte (mLLDPE) in Gegenwart eines Metallocenkomplexes der Formel (I) hergestellt wird:

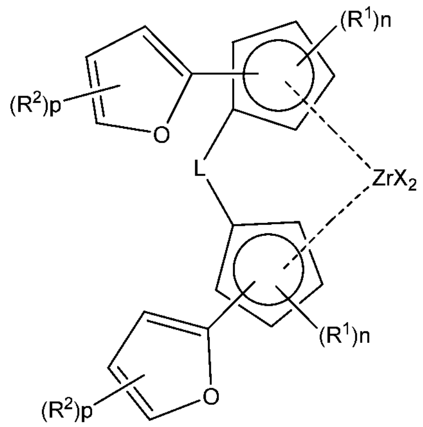

(I)

wobei jedes X unabhängig voneinander ein Halogenatom, eine $C_{1-6}$-Alkylgruppe, eine $C_{1-6}$-Alkoxygruppe, eine Phenyl- oder Benzylgruppe ist;
jedes Het unabhängig voneinander eine monocyclische heteroaromatische Gruppe ist, die mindestens ein Heteroatom enthält, das aus O oder S ausgewählt ist;
L $-R'_2Si-$ ist, wobei jedes R' unabhängig voneinander $C_{1-20}$-Hydrocarbyl oder $C_{1-10}$-Alkyl substituiert mit Alkoxy mit 1 bis 10 Kohlenstoffatomen ist;
M Ti, Zr oder Hf ist;
jedes $R_1$ gleich oder unterschiedlich ist und eine $C_{1-6}$-Alkylgruppe oder $C_{1-6}$-Alkoxygruppe ist;
jedes n 1 bis 2 ist;
jedes $R_2$ gleich oder unterschiedlich ist und eine $C_{1-6}$-Alkylgruppe, $C_{1-6}$-Alkoxygruppe oder $-Si(R)_3$-Gruppe ist;
jedes R eine $C_{1-10}$-Alkyl- oder Phenylgruppe ist, die optional mit 1 bis 3 $C_{1-6}$-Alkylgruppen substituiert ist; und
jedes p 0 bis 1 ist.

**6.** Polyethylenmischung nach einem der vorstehenden Ansprüche, wobei das LDPE einen $MFR_2$ (190 °C, 2,16 kg, ISO 1133) im Bereich von 0,15 bis 1,5 g/10 min, bevorzugt im Bereich von 0,20 bis 1,0 g/10 min, stärker bevorzugt im Bereich von 0,20 bis 0,70 g/10 min und
eine gemäß ISO 1183 bestimmte Dichte im Bereich von 913 bis 930 $kg/m^3$, bevorzugt im Bereich von 914 bis 930 $kg/m^3$ und noch stärker bevorzugt im Bereich von 914 bis 925 $kg/m^3$ aufweist.

**7.** Polyethylenmischung nach einem der vorstehenden Ansprüche, wobei die Mischung besteht aus

a) 65,0 bis 95,0 Gew.-%, bevorzugt 70,0 Gew.-% bis 90,0 Gew.-%, basiert auf dem Gesamtgewicht der Polyethylenmischung, des Polyethylens niedriger Dichte (LDPE) und
b) 5,0 Gew.-% bis 35,0 Gew.-%, bevorzugt 10,0 Gew.-% bis 30,0 Gew.-%, basiert auf dem Gesamtgewicht der Polyethylenmischung, des multimodalen metallocenkatalysierten linearen Polyethylens niedriger Dichte (mLLDPE), wobei sich die Gesamtmengen von a) + b) 100 Gew.-% aufsummieren oder

wobei die Mischung besteht aus

a) 70,0 Gew.-% bis 85,0 Gew.-%, bevorzugt 70,0 bis 80,0 Gew.-%, basiert auf dem Gesamtgewicht der Polyethylenmischung, des Polyethylens niedriger Dichte (LDPE) und
b) 15,0 Gew.-% bis 30,0 Gew.-%, bevorzugt 20,0 Gew.-% bis 30,0 Gew.-%, basiert auf dem Gesamtgewicht der Polyethylenmischung, des multimodalen metallocenkatalysierten linearen Polyethylens niedriger Dichte (mLLDPE), wobei sich die Gesamtmengen von a) + b) 100 Gew.-% aufsummieren.

**8.** Verwendung einer Polyethylenmischung nach einem der vorstehenden Ansprüche zum Anfertigen von einlagigen Blasfolien.

**9.** Einlagige Blasfolie, die eine Polyethylenmischung nach einem der vorstehenden Ansprüche 1 bis 7 umfasst, wobei die Folie bevorzugt mindestens aufweist

a) eine Drop-Schlagfestigkeit (DDI), bestimmt gemäß ASTM D1709, Methode A, an einer 40 µm einlagigen Testblasfolie, von mindestens 200 g bis zu 1000 g, bevorzugt 220 g bis zu 800 g und stärker bevorzugt 240 g bis zu 500 g und
b) eine optomechanische Fähigkeit (OMA) gemäß Formel (II):

$$OMA = \frac{Zugmodul\ (MD)[MPa] * DDI(g)}{Trübung\ (40\mu m)[\%]}$$

die an einer 40-µm-Testblasfolie bestimmt wird, mindestens 1200 [MPa*g/%] bis zu 5000 [MPa*g/%], bevorzugt im Bereich von 1300 [MPa*g/%] bis zu 4000 [MPa*g/%], stärker bevorzugt im Bereich von 1400 [MPa*g/%] bis 3000 [MPa*g/%] ist, wobei der Zugmodul in Maschinenrichtung gemäß ISO 527-3 bei 23 °C an 40 µm Testblasfolien gemessen wird, DDI die Dart-Drop-Schlagfestigkeit ist, bestimmt gemäß ASTM D1709, Methode A, an einer 40 µm Testblasfolie, und die Trübung gemäß ASTM D1003 an einer 40 µm Testblasfolie gemessen wird.

**10.** Einlagige Polyethylen-Blasfolie nach Anspruch 9, wobei die Folie zusätzlich eine Durchstoßfestigkeit - maximale Kraft (PRF-max) von mindestens 50 N, stärker bevorzugt mindestens 52 N und am stärksten bevorzugt mindestens 55 N aufweist, wenn gemessen an einer 40 µm starken Testblasfolie gemäß ASTM D5758 bei einer Testgeschwindigkeit von 250 mm/min.

**11.** Einlagige Blasfolie, der eine Polyethylenmischung nach einem der vorstehenden Ansprüche 1 bis 7 umfasst, wobei die Folie **dadurch gekennzeichnet ist, dass** sie aufweist

a) eine Dart-Drop-Schlagfestigkeit (DDI), bestimmt gemäß ASTM D1709, Methode A, auf einer 40 µm einlagigen Testblasfolie, von mindestens 240 g bis zu 1000 g, bevorzugt 250 g bis zu 800 g, und
b) eine optomechanische Fähigkeit (OMA) gemäß Formel (II):

$$OMA = \frac{Zugmodul\ (MD)[MPa] * DDI(g)}{Trübung\ (40\mu m)[\%]}$$

bestimmt an einer 40 µm Testblasfolie, mindestens 1650 [MPa*g/%] bis zu 5000 [MPa*g/%], bevorzugt im Bereich von 1700 [MPa*g/%] bis zu 4000 [MPa*g/%] ist, wobei der Zugmodul in Maschinenrichtung gemäß ISO 527-3 bei 23 °C an 40 µm Testblasfolien gemessen wird, DDI die Dart-Drop-Schlagfestigkeit ist, bestimmt gemäß ASTM D1709, Methode A, an einer 40 µm Testblasfolie, und die Trübung gemäß ASTM D1003 auf einer 40 µm Testblasfolie gemessen wird, und
c) eine Durchstoßfestigkeit - maximale Kraft (PRF-max) von mindestens 54 N bis zu 70 N, bevorzugt mindestens 55 N bis zu 65 N, gemessen an einer 40 µm Testblasfolie gemäß ASTM D5758 bei einer Testgeschwindigkeit von 250 mm/min.

**12.** Einlagige Blasfolie nach Anspruch 11, wobei die Folie mindestens zwei von den Eigenschaften a), b) oder c) aufweist, bevorzugt alle Eigenschaften a), b) und c) aufweist.

**13.** Verwendung einer Folie nach einem der vorstehenden Ansprüche 9 bis 12 als Verpackungsmaterial, insbesondere als Verpackungsmaterial für Lebensmittel.

**14.** Verwendung einer Folie nach einem der vorstehenden Ansprüche 9 bis 12 als eine Schicht in mehrschichtigen Polyethylen-basierten Blasfolien, bevorzugt als Kernschicht in mehrschichtigen Polyethylen-basierten Blasfolien.

**15.** Mehrschichtige Blasfolie, die als eine Schicht, bevorzugt als Kernschicht, eine Folie nach einem der vorstehenden Ansprüche 9 bis 12 umfasst.

## Revendications

**1.** Mélange de polyéthylènes comprenant

a) 60,0 % en poids à 99,0 % en poids, sur la base du poids total du mélange de polyéthylènes, d'un polyéthylène basse densité (LDPE), ledit LDPE possédant

une densité dans la plage de 910 à 930 kg/$m^3$ et
un $MFR_2$ (190 °C, 2,16 kg, ISO 1133) dans la plage de 0,1 à 2,0 g/10 min ; et

b) 1,0 % en poids à 40,0 % en poids, sur la base du poids total du mélange de polyéthylènes, d'un polyéthylène basse densité linéaire catalysé par un métallocène multimodal (mLLDPE) qui est constitué par

(i) 30,0 à 70,0 % en poids d'un composant polymère d'éthylène-1-butène (A), et
(ii) 70,0 à 30,0 % en poids d'un composant polymère d'éthylène-1-hexène (B),

le composant polymère d'éthylène-1-butène (A) possédant
une densité dans la plage de 920 à 950 kg/$m^3$, et
un $MFR_2$ (190 °C, 2,16 kg, ISO 1133) dans la plage de 2,0 à 400,0 g/10 min et
le composant polymère d'éthylène (B) possédant
une densité dans la plage de 885 à 918 kg/$m^3$, et
un $MFR_2$ (190 °C, 2,16 kg, ISO 1133) dans la plage de 0,001 à 1,5 g/10 min,
le polyéthylène basse densité linéaire catalysé par un métallocène multimodal (mLLDPE) possédant
une densité dans la plage de 910 à 930 kg/$m^3$,
un $MFR_2$ (190 °C, 2,16 kg, ISO 1133) dans la plage de 0,1 à 2,5 g/10 min et
un rapport de $MFR_{21}$ (190 °C, 21,6 kg, ISO 1133) sur $MFR_2$ (190 °C, 2,16 kg, ISO 1133), $MFR_{21}/MFR_2$, dans la plage de 21 à 100.

**2.** Mélange de polyéthylènes selon la revendication 1, dans lequel dans le polyéthylène basse densité linéaire catalysé par un métallocène multimodal (mLLDPE) le composant polymère d'éthylène-1-butène (A) est constitué d'une fraction de polymère d'éthylène (A-1) et d'une fraction de polymère d'éthylène (A-2),

dans lequel la fraction de polymère d'éthylène (A-1) possède
une densité dans la plage de 920 à 950 kg/$m^3$, de préférence de 925 à 948 kg/$m^3$, de préférence encore de 930 à 946 kg/$m^3$ ; et
un $MFR_2$ (190 °C, 2,16 kg, ISO 1133) dans la plage de 1,0 à 800,0 g/10 min, de préférence de 1,5 à 400,0 g/10 min, plus préférablement de 1,8 à 200,0 g/10 min et encore plus préférablement de 2,0 à 50,0 g/10 min, et
la fraction de polymère d'éthylène (A-2) possède
une densité dans la plage de 920 à 950 kg/$m^3$, de préférence de 925 à 945 kg/$m^3$, et
un $MFR_2$ (190 °C, 2,16 kg, ISO 1133) dans la plage de 2,0 à 400,0 g/10 min, de préférence de 2,5 à 200,0 g/10 min, plus préférablement de 3,0 à 100,0 g/10 min, et le plus préférablement de 3,5 à 80,0 g/10 min.

**3.** Mélange de polyéthylènes selon la revendication 1 ou 2, dans lequel, dans le polyéthylène basse densité linéaire catalysé par un métallocène multimodal (mLLDPE)

- le composant polymère d'éthylène (A) a un $MFR_2$ (190 °C, 2,16 kg, ISO 1133) de 2,5 à 300 g/10 min, de préférence de 3,0 à 200 g/10 min et plus préférablement de 3,2 à 100 g/10 min et
- le composant polymère d'éthylène (B) possède un $MFR_2$ (190 °C, 2,16 kg, ISO 1133) de 0,005 à 1,0 g/10 min, de préférence de 0,01 à 0,8 g/10 min et plus préférablement de 0,02 à 0,5 g/10 min.

**4.** Mélange de polyéthylènes selon l'une quelconque des revendications précédentes, dans lequel, dans le polyéthylène linéaire basse densité catalysé par un métallocène multimodal (mLLDPE), le rapport du $MFR_{21}$ (190 °C, 21,6 kg, ISO 1133) sur $MFR_2$ (190 °C, 2,16 kg, ISO 1133), $MFR_{21}/MFR_2$ est dans la plage de 24 à 60 et de préférence de 27 à 45 et dans lequel le rapport du $MFR_2$ du composant de type polymère d'éthylène (A) sur le $MFR_2$ du mLLDPE final est d'au moins 3,0 à 120,0, de préférence 3,5 à 100,0 et plus préférablement de 4,0 à 90,0.

**5.** Mélange de polyéthylènes selon l'une quelconque des revendications précédentes, dans lequel le polyéthylène basse densité linéaire catalysé par un métallocène multimodal (mLLDPE) est produit en présence d'un complexe de

métallocène de formule (I) :

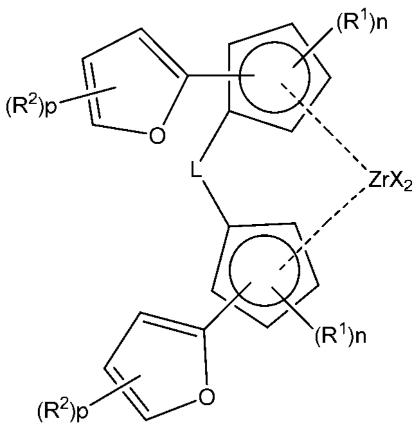

(I)

chaque X étant indépendamment un atome d'halogène, un groupe $C_{1-6}$-alkyle, un groupe $C_{1-6}$-alcoxy, un groupe phényle ou benzyle ;
chaque Het étant indépendamment un groupe hétéroaromatique monocyclique contenant au moins un hétéroatome choisi parmi O ou S ;
L étant -$R'_2$Si-, chaque R' étant indépendamment $C_{1-20}$-hydrocarbyle ou $C_{1-10}$-alkyle substitué par alcoxy ayant 1 à 10 atomes de carbone ;
M étant Ti, Zr ou Hf ;
chaque $R_1$ étant identique ou différent et étant un groupe $C_{1-6}$-alkyle ou $C_{1-6}$-alcoxy ;
chaque n étant 1 à 2 ;
chaque $R_2$ étant identique ou différent et étant un groupe $C_{1-6}$-alkyle, un groupe $C_{1-6}$-alcoxy ou un groupe -Si(R)$_3$ ;
chaque R est un groupe $C_{1-10}$-alkyle ou phényle éventuellement substitué par 1 à 3 groupes $C_{1-6}$-alkyle ; et
chaque p étant 0 à 1.

**6.** Mélange de polyéthylènes selon l'une quelconque des revendications précédentes, dans lequel le LDPE a un $MFR_2$ (190 °C, 2,16 kg, ISO 1133) dans la plage de 0,15 à 1,5 g/10 min, de préférence dans la plage de 0,20 à 1,0 g/10 min, plus préférablement dans la plage de 0,20 à 0,70 g/10 min et
une densité déterminée selon la norme ISO 1183 dans la plage de 913 à 930 kg/$m^3$ et de préférence dans la plage de 914 à 930 kg/$m^3$ et plus préférablement dans la plage de 914 à 925 kg/$m^3$.

**7.** Mélange de polyéthylènes selon l'une quelconque des revendications précédentes, dans lequel le mélange est constitué par

a) 65,0 à 95,0 % en poids, de préférence 70,0 % en poids à 90,0 % en poids, sur la base du poids total du mélange de polyéthylènes, du polyéthylène basse densité (LDPE) et
b) 5,0 % en poids à 35,0 % en poids, de préférence 10,0 % à 30,0 % en poids, sur la base du poids total du mélange de polyéthylènes, du polyéthylène à basse densité linéaire catalysé par un métallocène multimodal (mLLDPE), les quantités totales de a) + b) totalisant donc jusqu'à 100 % en poids ou

dans lequel le mélange est constitué par

a) 70,0 % en poids à 85,0 % en poids, de préférence de 70,0 à 80,0 % en poids, sur la base du poids total du mélange de polyéthylènes, du polyéthylène basse densité (LDPE) et
b) 15,0 % en poids à 30,0 % en poids, de préférence 20,0 % à 30,0 % en poids, sur la base du poids total du mélange de polyéthylènes, du polyéthylène à basse densité linéaire catalysé par un métallocène multimodal (mLLDPE), les quantités totales de a) + b) totalisant jusqu'à 100 % en poids.

**8.** Utilisation d'un mélange de polyéthylènes selon l'une quelconque des revendications précédentes pour la préparation de films soufflés monocouches.

**9.** Film soufflé monocouche, comprenant un mélange de polyéthylènes selon l'une quelconque des revendications précédentes 1 à 7, dans lequel le film a de préférence au moins

a) une résistance à l'impact de chute au mouton (DDI) déterminée conformément à la norme ASTM D1709, procédé A sur un film soufflé de test monocouche de 40 μm d'au moins 200 g jusqu'à 1 000 g, de préférence 220 g jusqu'à 800 g et plus préférablement 240 g jusqu'à 500 g et
b) une capacité optomécanique (OMA) selon la formule (II) :

$$OMA = \frac{\text{Module de traction (MD)[MPa]} * \text{DDI(g)}}{\text{Trouble (40 µm)[\%]}}$$

déterminée sur un film soufflé de test de 40 μm qui est d'au moins 1 200 [MPa*g/%] jusqu'à 5 000 [MPa*g/%], de préférence dans la plage de 1 300 [MPa*g/%] jusqu'à 4 000 [MPa*g/%], plus préférablement dans la plage de 1 400 [MPa*g/%] jusqu'à 3 000 [MPa*g/%], le module de traction dans le sens machine étant mesuré selon la norme ISO 527-3 à 23 °C sur des films soufflés de test de 40 μm, DDI est la résistance à l'impact de chute au mouton déterminée selon la norme ASTM D1709, procédé A sur un film soufflé de test de 40 μm et le trouble est mesuré selon la norme ASTM D1003 sur un film soufflé de test de 40 μm.

**10.** Film soufflé de polyéthylène monocouche selon la revendication 9, dans lequel le film a en outre une résistance à la perforation - force maximale (PRF-max) d'au moins 50 N, plus préférablement d'au moins 52 N, et le plus préférablement d'au moins 55 N, lorsqu'elle est mesurée sur un film soufflé de test de 40 μm selon la norme ASTM D5758 à une vitesse de test de 250 mm/min.

**11.** Film soufflé monocouche, comprenant un mélange de polyéthylènes selon l'une quelconque des revendications précédentes 1 à 7, dans lequel le film est **caractérisé en ce qu'**il a

a) une résistance à l'impact de chute au mouton (DDI) déterminée selon la norme ASTM D1709, procédé A sur un film soufflé de test monocouche de 40 μm d'au moins 240 g jusqu'à 1 000 g, préférablement 250 g jusqu'à 800 g, et
b) une capacité optomécanique (OMA) selon la formule (II) :

$$OMA = \frac{\text{Module de traction (MD)[MPa]} * \text{DDI(g)}}{\text{Trouble (40 µm)[\%]}}$$

déterminée sur un film soufflé de test de 40 μm qui est d'au moins 1 650 [MPa*g/%] jusqu'à 5 000 [MPa*g/%], de préférence dans la plage de 1 700 [MPa*g/%] jusqu'à 4 000 [MPa*g/%], le module de traction dans le sens machine étant mesuré selon la norme ISO 527-3 à 23 °C sur des films soufflés de test de 40 μm, DDI étant la résistance à l'impact de chute au mouton déterminée selon la norme ASTM D1709, procédé A sur un film soufflé de test de 40 μm et le trouble est mesuré selon la norme ASTM D1003 sur un film soufflé de test de 40 μm et
c) une résistance à la perforation - force maximale (PRF-max) d'au moins 54 N jusqu'à 70 N, de préférence d'au moins 55 N jusqu'à 65 N, mesurée sur un film soufflé de test de 40 μm selon la norme ASTM D5758 à une vitesse de test de 250 mm/min.

**12.** Film soufflé monocouche selon la revendication 11, dans lequel le film a au moins deux des propriétés a), b) ou c), de préférence le film a toutes les propriétés a), b) et c).

**13.** Utilisation d'un film selon l'une quelconque des revendications précédentes 9 à 12 comme matériau d'emballage, en particulier comme matériau d'emballage pour un produit alimentaire.

**14.** Utilisation d'un film selon l'une quelconque des revendications 9 à 12 précédentes en tant que couche dans des films soufflés à base de polyéthylène multicouche, de préférence en tant que couche centrale dans des films soufflés à base de polyéthylène multicouche.

**15.** Film soufflé multicouche comprenant comme couche, de préférence comme couche centrale, un film selon l'une quelconque des revendications précédentes 9 à 12.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2022018239 A1
- EP 3298067 A1
- WO 2021191019 A1
- US 10494465 B2
- WO 2016198273 A
- WO 2021009189 A
- WO 2021009190 A
- WO 2021009191 A
- WO 2021009192 A

### Non-patent literature cited in the description


- **KLIMKE, K.** ; **PARKINSON, M.** ; **PIEL, C.** ; **KAMINSKY, W.** ; **SPIESS, H.W.** ; **WILHELM, M.** *Macromol. Chem. Phys.*, 2006, vol. 207, 382
- **PARKINSON, M.** ; **KLIMKE, K.** ; **SPIESS, H.W.** ; **WILHELM, M.** *Macromol. Chem. Phys.*, 2007, vol. 208, 2128
- **POLLARD, M.** ; **KLIMKE, K.** ; **GRAF, R.** ; **SPIESS, H.W.** ; **WILHELM, M.** ; **SPERBER, O** ; **PIEL, C** ; **KAMINSKY, W.** *Macromolecules*, 2004, vol. 37, 813
- **FILIP, X.** ; **TRIPON, C.** ; **FILIP, C.** *J. Mag. Resn.*, 2005, vol. 176, 239
- **GRIFFIN, J.M** ; **TRIPON, C** ; **SAMOSON, A** ; **FILIP, C** ; **BROWN, S.P**. *Mag. Res. in Chem.*, 2007, vol. 45 (S1), S198
- **CASTIGNOLLES, P** ; **GRAF, R.** ; **PARKINSON, M.** ; **WILHELM, M** ; **GABORIEAU, M.** *Polymer*, vol. 50 (2009), 2373
- **BUSICO, V.** ; **CIPULLO, R**. *Prog. Polym. Sci.*, vol. 26 (2001), 443
- **BUSICO, V.** ; **CIPULLO, R** ; **MONACO, G** ; **VACATELLO, M** ; **SEGRE, A.L**. *Macromoleucles*, 1997, vol. 30, 6251
- **ZHOU, Z** ; **KUEMMERLE, R** ; **QIU, X.** ; **REDWINE, D** ; **CONG, R** ; **TAHA, A** ; **BAUGH, D** ; **WINNIFORD, B.** *J. Mag. Reson.*, 2007, vol. 187, 225
- **BUSICO, V** ; **CARBONNIERE, P.** ; **CIPULLO, R** ; **PELLECCHIA, R.** ; **SEVERN, J.** ; **TALARICO, G.** *Macromol. Rapid Commun.*, 2007, vol. 28, 1128
- **RESCONI, L.** ; **CAVALLO, L.** ; **FAIT, A.** ; **PIEMONTESI, F**. *Chem. Rev.*, 2000, vol. 100, 1253